# EUROPÄISCHE PATENTSCHRIFT

(11) **EP 1 963 146 B1**
(45) Veröffentlichungstag und Bekanntmachung des Hinweises auf die Patenterteilung: **16.06.2010**
(21) Anmeldenummer: 06818825.9
(22) Anmeldetag: 25.11.2006
(51) Int. Cl.: B60R 22/34, B60R 22/46

(54) **SICHERHEITSGURTAUFROLLER MIT GURTAUSZUGSGESTEUERTER KRAFTBEGRENZUNGSVORRICHTUNG**
SEAT-BELT RETRACTOR COMPRISING A FORCE LIMITING DEVICE THAT IS CONTROLLED BY THE WITHDRAWAL OF THE BELT
ENROULEUR DE CEINTURE DE SECURITE COMPORTANT UN LIMITATEUR DE FORCE COMMANDE EN FONCTION DE L'EXTRACTION DE LA CEINTURE

(30) Priorität: 19.12.2005 DE 102005061025
(43) Veröffentlichungstag der Anmeldung: 03.09.2008
(73) Patentinhaber: AUTOLIV DEVELOPMENT AB, 447 83 Vargarda (SE)
(72) Erfinder: SINGER, Klaus-Peter, 22399 Hamburg (DE)
(74) Vertreter: Müller, Karl-Ernst
(86) Internationale Anmeldenummer: PCT/EP2006/011315
(87) Internationale Veröffentlichungsnummer: WO 2007/073815

(56) Entgegenhaltungen:
- DE-U1- 20 015 402
- US-A- 5 607 118
- US-A1- 2005 284 978

## Beschreibung

Die Erfindung betrifft einen Sicherheitsgurtaufroller für Kraftfahrzeuge mit einer fahrzeugsensitiv und/oder gurtbandsensitiv ansteuerbaren Blockiervorrichtung für die Gurtwelle, mit einem Profilkopf als Träger eines zur Verriegelung der Gurtwelle mit dem Gehäuse beweglich angeordneten Sperrgliedes und mit einer zweistufig ausgebildeten und zwei in Reihe hintereinander geschaltete Kraftbegrenzungselemente aufweisenden Kraftbegrenzungsvorrichtung, wobei die Kraftbegrenzungselemente über eine zwischengeschaltete und mittels einer Steuervorrichtung ansteuerbaren Kupplung zwischen einem hohen Kraftbegrenzungsniveau und einem niedrigen Kraftbegrenzungsniveau schaltbar sind.

Ein Sicherheitsgurtaufroller mit den vorgenannten Merkmalen ist in der DE 200 15 402 U1 beschrieben. Dieser Sicherheitsgurtaufroller weist zusätzlich zu einem zwischen der Gurtwelle und seinem Profilkopf angeordneten Torsionsstab zwei weitere miteinander in Reihe geschaltete Kraftbegrenzungsvorrichtungen in Form von zwei Rutschkupplungen auf, die über einen außen- und innenverzahnten Zahnring miteinander gekuppelt sind. Dabei wirkt die erste, ein hohes Kraftbegrenzungsniveau aufweisende Reibkupplung zwischen der Gurtwelle beziehungsweise deren Profilkopf und dem Zahnring und die zweite Reibkupplung zwischen dem Zahnring und dem Gehäuse. Der Zahnring ist im Ausgangszustand über eine von einer Steuervorrichtung ansteuerbare Klinke gehäusefest festgelegt, wobei die Klinke im Bedarfsfall von der Steuervorrichtung außer Eingriff mit dem Zahnring ausgesteuert wird, so dass der Zahnring gegenüber dem Gurtaufrollergehäuse frei drehbar ist.

Die Steuerung der Kraftbegrenzungselemente bei dem bekannten Gurtaufroller ist dabei so eingerichtet, dass der Zahnring über die Klinke gehäusefest festgelegt ist, so dass in einem Unfall zunächst das höhere Kraftbegrenzungsniveau wirkt. Wird durch ein fahrzeugseitiges Signal festgestellt, dass aufgrund der Größe, des Gewichts oder der Position des Fahrers oder aufgrund der Unfallschwere die auf den Insassen wirkende Rückhaltekraft zu groß wird, so wird die Klinke außer Eingriff mit dem Zahnring gesteuert, so dass der Zahnring gegenüber dem Gehäuse frei drehbar ist. Somit kommt es zu einer Relativbewegung zwischen Gehäuse und Zahnring, wobei die zwischen dem Gehäuse und dem Zahnring liegende zweite Reibkupplung als Kraftbegrenzung mit einem niedrigeren Kraftbegrenzungsniveau wirkt. Der Schaltvorgang vollzieht sich demnach jeweils vom hohen Kraftbegrenzungsniveau zum niedrigeren Kraftbegrenzungsniveau und ist nicht reversibel. Insofern ist mit dem bekannten Gurtaufroller der Nachteil verbunden, dass auch auf kleinere beziehungsweise leichtere angeschnallte Personen zunächst das hohe Kraftbegrenzungsniveau einwirkt, was zu einem entsprechend starken Anstieg der Rückhaltekraft führt. Erst bei einer zu hohen Rückhaltekraft erfolgt die Absenkung des Kraftbegrehzungsniveaus. Ein weiterer Nachteil besteht darin, dass der bekannte Sicherheitsgurtaufroller keine Berücksichtigung von momentanen Sitzpositionänderungen durch Bewegungen des angeschnallten Insassen auf dem Sitz erlaubt.

Der Erfindung liegt daher die Aufgabe zugrunde, einen Sicherheitsgurtaufroller mit den gattungsgemäßen Merkmalen derart weiterzubilden, dass die Einstellung des Kraftbegrenzungsniveaus flexibler und besser auf die Insassenverhältnisse angepasst erfolgt.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass die Steuervorrichtung für das Umschalten der Kupplung zwischen dem hohen Kraftbegrenzungsniveau und dem niedrigen Kraftbegrenzungsniveau aus einem das Mass des jeweiligen Gurtbandauszuges von der Gurtwelle feststellenden Zählgetriebe besteht und die Kupplung reversibel zwischen dem hohen Kraftbegrenzungsniveau und dem niedrigen Kraftbegrenzungsniveau hin- und herschaltbar ist.

Mit der Erfindung ist der Vorteil verbunden, dass das Kraftbegrenzungsniveau von vorneherein in Abhängigkeit von dem im Augenblick des Unfalls vorliegenden Gurtbandauszug jeweils entweder auf ein hohes Niveau oder auf ein niedriges Niveau eingestellt wird. Damit kann nicht nur der durch die Körpermaße und die jeweilige Kleidung bedingte Gurtbandauszug berücksichtigt werden, sondern auch die im Augenblick des Unfalls gerade herschende Sitzposition des Fahrzeuginsassen. Hat sich nämlich ein kleiner und damit in der Regel leichter Insasse, für den nach dem Stand der Technik ein niedriges Kraftbegrenzungsniveau einzuschalten ist, kurz vor dem Unfall vorgebeugt, so befindet er sich unter Umständen in entsprechender Nähe zu einem Fahrzeugteil, so dass der mit einem niedrigen Kraftbegrenzungsniveau verbundene größere Gurtbandauslassweg bereits zu einer Gefährdung des Insassen führen kann. Bei dem erfindungsgemäßen Sicherheitsgurtaufroller ist dagegen sichergestellt, dass auch in diesem Fall unmittelbar das hohe Kraftbegrenzungsniveau über die Abfrage des Gurtbandauszuges zugeschaltet ist, bei welchem unter Inkaufnahme einer höheren Gurtkraft eine mögliche Vorwärtsverlagerung des Insassen vermindert und soweit auch der kleine Insasse besser geschützt ist.

Weiterhin ist in vorteilhafter Weise der Schutz für solche Personen verbessert die mit einem kurz vor dem Schaltpunkt liegenden Gurtauszug angeschnallt sind und für die insoweit das niedrige Kraftbegrenzungsniveau eingestellt ist. Bei einem Unfall kommt es zu einer durch das Ansprechen des das niedrige Kraftbegrenzungsniveau aufweisenden Kraftbegrenzungselementes zu einem Gurtauszug, bei dem die Schaltposition überschritten werden kann und demzufolge dann das hohe Kraftbegrenzungsniveau zugeschaltet wird.

Nach einem Ausführungsbeispiel der Erfindung ist vorgesehen, dass die Kupplung aus einem am Gehäuse des Gurtaufrollers drehbar gelagerten und im Blockierfall von dem Sperrglied des Profilkopfes in Eingriff genommenen Zahnring und aus einer von der Steuervorrichtung zwischen zwei Schaltstellungen hin und her bewegbaren Klinke besteht, mittels der der Zahnring in der einen Schaltstellung freigegeben und in der anderen Schaltstellung gehäusefest verriegelt ist. Soweit die Verwendung eines Zahnringes zur Ausführung der Schaltverbindung zwischen zwei Kraftbegrenzungseinrichtungen aus der DE 200 15 402 U1 bekannt ist, ist eine Bewegung der zugehörigen Klinke nur in einer Schaltrichtung vorgesehen.

Im einzelnen kann vorgesehen sein, dass die Kraftbegrenzungselemente bezüglich des Zahnringes derart angeordnet sind, dass die erste Kraftbegrenzungsstufe mit dem niedrigen Kraftbegrenzungsniveau bei gegenüber dem Gehäuse drehbaren Zahnring und die zweite Kraftbegrenzungsstufe mit dem hohen Kraftbegrenzungsniveau bei durch die von der Steuervorrichtung in Eingriff mit dem Zahnring angesteuerte Klinke gehäusefest festgelegten Zahnring verwirklicht ist.

Nach einem Ausführungsbeispiel der Erfindung ist vorgesehen, dass das das niedrige Kraftbegrenzungsniveau festlegende Kraftbegrenzungselement ein außerhalb der Gurtwelle im Gurtaufrollergehäuse angeordneter Torsionsstab ist, dessen eines Ende gehäusefest eingespannt und dessen anderes Ende über ein Verbindungsmittel an den Zahnring angeschlossen ist derart, daß die Drehung des Zahnringes in eine Tordierung des Torsionsstabes umsetzbar ist. Hierzu ist ein außerhalb der Gurtwelle angeordneter Torsionsstab als zweites Kraftbegrenzungselement aus der EP 0 913 300 A1 bekannt, der über ein Zahnradgetriebe unmittelbar mit Gurtwelle verbunden ist und sich somit jeweils gemeinsam mit der Gurtwelle dreht. Bei einem entsprechenden Lastfall wird der zweite Torsionsstab blockiert, so dass sich seine Kraftbegrenzungswirkung zu dem von einem ersten in der Gurtwelle angeordneten Torsionsstab aufgebauten Kraftbegrenzungsniveau hinzu addiert. Im Gegensatz dazu ist bei der Erfindung der außenliegende Torsionsstab von dem zweiten Kraftbegrenzungselement beispielsweise ebenfalls in Form eines in der Gurtwelle angeordneten Torsionsstabes über den drehbaren Zahnring abgekoppelt.

Nach einem Ausführungsbeispiel der Erfindung ist vorgesehen, dass das Verbindungsmittel aus einem Metallband mit vorgegebener Länge besteht, dessen eines Ende an dem Zahnring eingehängt und dessen anderes Ende auf einer drehfest mit dem Torsionsstab verbundenen, drehbar am Gurtaufrollergehäuse angeordneten Wickelrolle aufgewickelt und endseitig daran befestigt ist. Hieraus ergibt sich der Vorteil, dass der mit dem Tordieren des Torsionsstabs verbundene Gurtbandauslass auch bei dem niedrigeren Kraftbegrenzungsniveau auf die Länge des abzuwickelnden Metallbandes begrenzt ist. Ist das Metallband vollständig abgewickelt, so erfolgt eine unmittelbare Kraftübertragung von dem Zahnring auf den tordierten Torsionsstab und damit in das Gehäuse, so dass ein starres System entsteht, welches auch bei ausgesteuerter Klinke und an sich drehbarem Zahnring nun trotzdem das höhere Kraftbegrenzungsniveau des weiteren Kraftbegrenzungselementes wirksam werden lässt. Damit ist eine zusätzliche Sicherheit für Personen gegeben, für die die Steuervorrichtung nur das niedrige Kraftbegrenzungsniveau vorsieht.

In einer alternativen Ausführungsform ist hinsichtlich der Ausbildung des das niedrigere Kraftbegrenzungsniveau festlegenden Kraftbegrenzungselements vorgesehen, dass das das niedrige Kraftbegrenzungsniveau festlegende Kraftbegrenzungselement eine außerhalb der Gurtwelle am Gurtaufrollergehäuse angeordnete Biegebremse mit einem durch eine gehäusefest angeordnete Schikane geführten Zugelement ist, welches mit seinem einen Ende an dem Zahnring angeschlossen ist derart, dass die Drehung des Zahnringes in ein energieaufnehmendes Durchziehen des Zugelementes durch die Schikane umsetzbar ist. Hiermit ist der Vorteil verbunden, dass die Anordnung einer Biegebremse als zusätzliches Kraftbegrenzungselement kostengünstig ist. Die Wirksamkeit der Kraftbegrenzung ist dabei in einfacher Weise über die Länge des durch die Schikane zu ziehenden Zugelementes, also dessen vorzuhaltenden Vorrat, einstellbar.

Hierbei kann nach unterschiedlichen Ausführungsbeispielen der Erfindung vorgesehen sein, dass das freie, einen Vorrat bildende Ende des Zugelementes außen um den Zahnring verlaufend angeordnet ist oder dass das freie, einen Vorrat bildenden Ende des Zugelementes in einem drehbar an dem Gurtaufrollergehäuse gelagerten Vorratsgehäuse angeordnet und aus dem Vorratsgehäuse ausziehbar ist.

In vorteilhafter Weise ist der Kraftverlauf während der Kraftbegrenzung durch die Wahl der Breite des Zugelementes einstellbar, indem das Zugelement über seine Länge eine gleich bleibende Breite aufweist oder indem das Zugelement über seine Länge eine in Abhängigkeit von der gewünschten Änderung des Kraftbegrenzungsniveaus unterschiedliche Breite aufweist.

Nach einem Ausführungsbeispiel der Erfindung ist vorgesehen, dass das Zählgetriebe aus einem mit der Gurtwelle verbundenen außenverzahnten Zahnrad, einem weiteren, gehäusefest angeordneten außenverzahnten Zahnrad und einem auf einer schwenkbar in zwei Schaltstellungen am Gehäuse gelagerten Schaltschwinge angeordneten dritten außenverzahnten Zahnrad besteht, wobei alle drei Zahnräder in Kämmeingriff miteinander stehen und auf den Zahnrädern jeweils die Schaltpunkte für die Schaltschwinge festlegende Schaltnoppen angeordnet sind, welche bei vorgegebenem Abwickelzustand in gegenseitigen Anschlag gelangen und dadurch durch die Schaltschwinge zwischen den Schaltstellungen verschwenken. Ein derartiges Zählgetriebe ist aus der DE 41 32 876 grundsätzlich bekannt, und zwar als Retraktorumschaltung für einen Gebrauch eines Sicherheitsgurtaufrollers bei einem Kindersitz. Das Zählgetriebe schaltet dabei das gurtbandsensitive beziehungsweise fahrzeugsensitive Steuersystem für die Blockierung der Gurtwelle bei einem Gebrauch des Retraktors mit einem Kindersitz ab. Bei dem bekannten Zählgetriebe sind auf einer Schaltwippe zwei Zahnräder mit entsprechenden Schaltnoppen angeordnet, die mit einem mit der Gurtwelle verbundenen Zahnrad jeweils kämmen. Aufgrund der Anordnung der Schaltnoppen auf den einzelnen Zahnrädern ergibt sich, dass zunächst einmal das Gurtband vollständig von der Gurtwelle abgewickelt werden muss, bevor es zu einem Schaltvorgang kommt, so dass bei einem Rücklauf des Gurtbandes bis in die für den Gebrauch eines Kindersitzes eingerichtete Auszugsstellung das entsprechende fahrzeugseitige Steuersystem abgeschaltet ist. Der weitere Rücklauf des Gurtbandes bis in die Ablegeposition führt dann zu einer erneuten Umschaltung mit einem Zuschalten des gurtbandsensitiven und fahrzeugsensitiven Steuersystems.

Da es bei der Erfindung auf die genaue Festlegung des Schaltpunktes für die Einsteuerung der Klinke in den Zahnring in Abhängigkeit von der Auszugsbewegung des Gurtbandes aber auch von der Aufwickelbewegung des Gurtbandes ankommt, ist nach einem Auführungsbeispiel der Erfindung vorgesehen, dass das mit der Gurtwelle verbundene Zahnrad sowei das am Gehäuse gelagerte Zahnrad jeweils einen Schaltnoppen und das auf der Schaltschwinge gelagerte Zahnrad zwei Schaltnoppen zur Begrenzung der Schalthysterese aufweisen. Somit wirkt jeder beiden auf dem auf der Schaltschwinge gelagerten Zahnrad angeordneten Schaltnoppen mit dem Schaltnoppen des wellenfesten Zahnrades beziehungsweise mit dem Schaltnoppen des am Gehäuse gelagerten Zahnrades zusammen, so dass die beiden Schaltpunkte über einen sehr kleinen Drehwinkel der Gurtwelle eingestellt werden können.

Soweit die von dem Zählgetriebe gesteuerte Schaltschwinge in ihren beiden Schaltstellungen die Klinke anzusteuern hat, ist nach alternativen Ausführungsformen der Erfindung vorgesehen, dass die Schaltschwinge die Klinke über eine mechanische Verbindung unmittelbar oder mittelbar über einen zwischengeschalteten Elektroschalter oder Pneumatikschalter ansteuert.

Für den Fall einer unmittelbaren mechanischen Ansteuerung ist nach einem Ausführungsbeispiel der Erfindung vorgesehen, dass an der Klinke eine relativ dazu bewegliche und mit der Schaltschwinge zusammenwirkende Steuerklinke angeordnet ist, die einen mit der Außenverzahnung des Zahnringes zusammenwirkenden Steuerzahn aufweist. Mit einer solchen Ausgestaltung ist sichergestellt, dass über den Eingriff der Steuerklinke die Klinke passgenau in die Außenverzahnung des sich drehenden Zahnrings eingesteuert wird, ohne dass es zu einer Zahn-auf-Zahn-Blockierung kommt. Dies gilt sowohl für den Schaltvorgang während des beim Anschnallvorgang oder bei Bewegungen der angeschnallten Person erfolgenden Gurtauszuges wie auch für die Umschaltung des Kraftbegrenzungsniveaus, wenn es aufgrund der mit der Vorverlagerung eines zunächst dem niedrigen Kraftbegrenzungsniveau ausgesetzten Insassen verbundenen Gurtbandauszuges zu einer Umschaltung durch Einsteuern der Klinke in die Außenverzahnung des Zahnringes kommt.

Hier kann nach einem Ausführungsbeispiel der Erfindung vorgesehen sein, dass die Klinke eine schlitzförmige Lagerausnehmung für die U-förmig ausgebildete und mit ihrem Verbindungsschenkel in die Lagerausnehmung mit Bewegungsspiel eingesetzte Steuerklinke aufweist. Im Hinblick auf die reversible Ausführung der Kupplung kann dabei vorgesehen sein, dass im Hinblick auf eine Rückstellung der Klinke die Klinke in ihre Freigabestellung für den Zahnring mittels einer Feder vorgespannt ist.

In einer Ausführungsform der Erfindung ist vorgesehen, dass die Steuerklinke von einer vorgespannten Feder in Richtung des Eingriffs in die Außenverzahnung des Zahnringes beaufschlagt und die vorgespannte Feder in der Freigabestellung der Steuerklinke für den Zahnring mittels einer gesondert schaltbaren Haltevorrichtung festgelegt ist, die bei Einsteuerung der Steuerklinke in die Außenverzahnung des Zahnringes die vorgespannte Feder freigibt. Hiermit ist der Vorteil verbunden, dass im Falle der dynamischen Einsteuerung der Steuerklinke in die Außenverzahnung des Zahnringes zu Beginn der Drehung des Zahnringes die Schaltkraft der Steuerklinke durch die Freigabe der vorgespannten Feder erhöht wird. Aufgrund der so bewirkten Erhöhung der Schaltkraft wie auch der nachfolgenden Eingriffskraft der Steuerklinke in die Außenverzahnung des Zahnringes ist einerseits ein Ausschalten des durch die Blockierung des Zahnringes eingestellten höheren Kraftbegrenzungsniveaus nicht mehr möglich, und andererseits wirkt die Steuerklinke aufgrund ihrer Federvorspannung zusätzlich als Rücklaufsperre gegen eine ungewollte Rückdrehung des Zahnringes.

Hierbei kann im einzelnen vorgesehen sein, dass die Haltevorrichtung aus einer relativ zur vorgespannten Feder zwischen einer Haltestellung und einer Freigabestellung beweglichen Kulisse besteht. Dazu ist nach einem Ausführungsbeispiel der Erfindung vorgesehen, dass die Kulisse in der Haltestellung durch einen Haltehebel gehalten ist, der sich formschlüssig in einer am Zahnring ausgebildeten Ausnehmung abstützt und bei Verdrehung des Zahnringes von dem Zahnring freikommt. Durch die Kopplung der Haltevorrichtung an die Drehung des Zahnringes ist sichergestellt, dass es nicht zu Fehlauslösungen beziehungsweise Fehlschaltungen kommt, weil die Freigabe der Haltevorrichtung ausschließlich durch die beginnende Drehung des Zahnringes bewirkt wird, wobei der Zahnring dann durch die unmittelbar wirksam werdende, Last aufnehmende Klinke festgelegt wird.

Soweit nach einem Ausführungsbeispiel der Erfindung vorgesehen ist, dass die vorgespannte Feder derart angeordnet und ausgerichtet ist, dass die Kraftlinie der Federkraft in der Freigabestellung der Steuerklinke für den Zahnring über die Drehlagerung der Steuerklinke an der Klinke verläuft und bei verschwenkter Steuerklinke aufgrund ihrer Ausknickung ein Drehmoment in Einsteuerrichtung der Steuerklinke in den Zahnring erzeugt, ist damit der Vorteil verbunden, dass in der Ruhestellung der vorgespannten Feder kein zusätzliches Drehmoment wirkt, welches von der Haltevorrichtung aufgenommen werden müsste. Erst bei Verschwenkung der Steuerklinke wird in der gewünschten Weise das beabsichtigte Drehmoment wirksam.

In der Zeichnung sind Ausführungsbeispiele der Erfindung wiedergegeben, welche nachstehend beschrieben sind. Es zeigen:
- Fig. 1: einen Gurtaufroller in einer Perspektivansicht,
- Fig. 2: den Gegenstand der Figur 1 in einem anderen Blickwinkel,
- Fig. 3: den Gegenstand gemäß Figuren 1 und 2 in einer Darstellung mit auseinander gezogenen Bauteilen
- Fig. 4: die als Zählgetriebe ausgebildete Steuervorrichtung in der einen Schaltstellung der Schaltschwinge in Draufsicht,
- Fig. 5: den Gegenstand der Figur 4 in der anderen Schaltstellung der Schaltschwinge,
- Fig. 6: den Zahnring mit dem daran angeschlossenen, das niedrigere Kraftbegrenzungsniveau aufweisenden Torsionsstab in einer Einzeldarstellung
- Fig. 7: die Klinke mit zugeordneter Steuerklinke und Zahnring in einer vergrößerten Ausschnittsdarstellung,
- Fig. 8: die Klinke mit daran montierter Steuerklinke in einer Perspektivansicht,
- Fig. 9: den Gegenstand der Figur 8 mit einer getrennten Darstellung von Klinke und Steuerklinke,
- Fig. 10a - c: den Ablauf der Einsteuerung der Klinke in die Außen- verzahnung des Zahnringes,
- Fig. 11a-c: die Steuerklinke mit einer sie beaufschlagenden, vorgespannten Feder und zugeordneten Halteeinrichtung für die vorgespannte Feder in den unterschiedlichen Funktionsstellungen der Steuerklinke,
- Fig. 12: den Zahnring mit dem daran angeschlossenen, das niedrigere Kraftbegrenzungsniveau aufweisenden Torsionsstab im Ausgangszustand in einer Seitenansicht,
- Fig. 13: den Gegenstand der Figur 12 bei abgewickeltem Metallband,
- Fig. 14: den Zahnring mit einer als Biegebremse ausgebildeten, das niedrigere Kraftbegrenzungsniveau aufweisenden Kraftbegrenzungsvorrichtung in einer Seitenansicht,
- Fig. 15: den Gegenstand der Figur 14 in einer abgewandelten Ausführungsform.

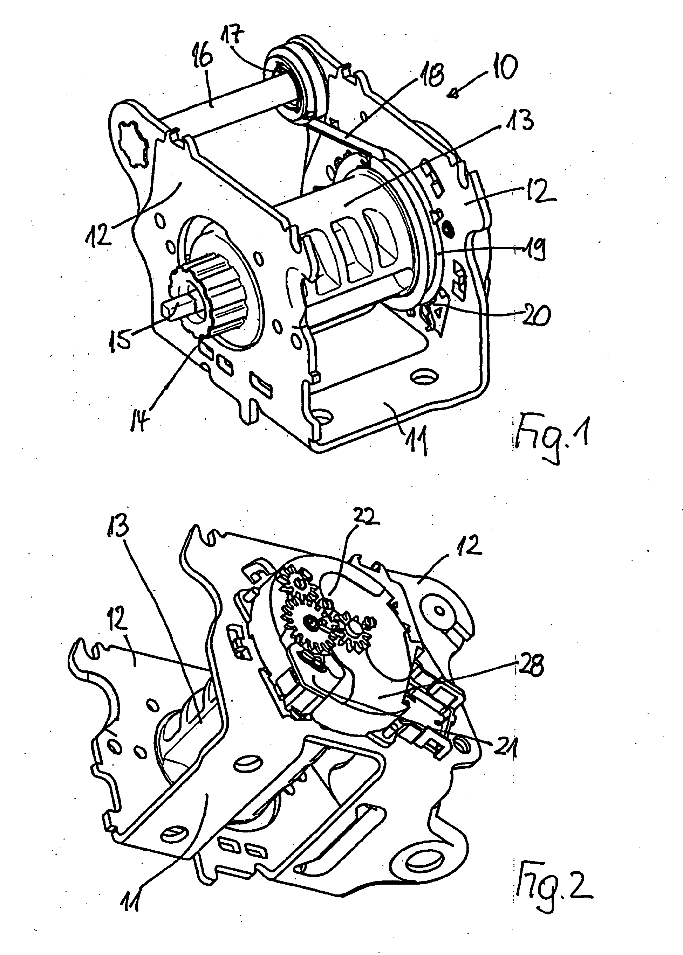

Der in den Figuren 1 und 2 dargestellte Sicherheitsgurtaufroller 10 hat ein U-förmiges Gehäuse 11 mit seitlichen Gehäuseschenkeln 12, in denen eine Gurtwelle 13 gelagert ist. Mit 14 ist die sogenannte Federseite der Gurtwelle bezeichnet, an der ein nicht weiter dargestelltes Federgehäuse für die Aufwickelbewegung der Gurtwelle angeordnet sein kann, ferner weitere Funktionselemente, wie beispielsweise eine Strammvorrichtung. Mit 15 ist das Ende eines in der Gurtwelle 13 angeordneten Torsionsstabes bezeichnet, der das Kraftbegrenzungselement mit dem hohen Kraftbegrenzungsniveau ausbildet.

Ein zweites Kraftbegrenzungselement mit einem jedenfalls gegenüber dem Torsionsstab 15 niedrigeren Kraftbegrenzungsniveau ist in Form eines außerhalb der Gurtwelle 13 angeordneten zweiten Torsionsstabes 16 vorgesehen, der mit seinem einen Ende formschlüssig in dem zugeordneten Gehäuseschenkel 12 des Gurtaufrollergehäuses 11 festgelegt ist und dessen anderes Ende drehfest mit einer an dem gegenüberliegenden Gehäuseschenkel 12 drehbar gelagerten Wickelrolle 17 verbunden ist. Auf der Wickelrolle 17 ist ein Metallband 18 aufgewickelt und mit seinem freien Ende an einem an dem betreffenden Gehäuseschenkel 12 drehbar gelagerten Zahnring 19 eingehängt. Wie sich aus anderen Zeichnungsfiguren ergibt, ist der Zahnring 19 mit einer Außenverzahnung versehen, welcher eine im Gehäuseschenkel 12 kraftübertragend gelagerte Klinke 20 zugeordnet ist.

Wie sich aus Figur 2 ergibt, ist auf der Außenseite des den Zahnring 19 lagernden Gehäuseschenkel 12 eine Lagerplatte 28 angeordnet, an der ein Zählgetriebe 22 mit einem mit dem zugeordneten Ende der Gurtwelle 13 verbundenen Zahnrand 23, einem an der Lagerplatte 28 gelagerten Zahnrad 24 sowie einem auf einer schwenkbar an der Lagerplatte 28 gelagerten Schaltschwinge 25 angeordneten Zahnrad 24 besteht. Die Schaltschwinge 25 untergreift mit einem Fortsatz die Lagerplatte 28 und wirkt mit der Klinke 20 in einer noch zu beschreibenden Weise zusammen.

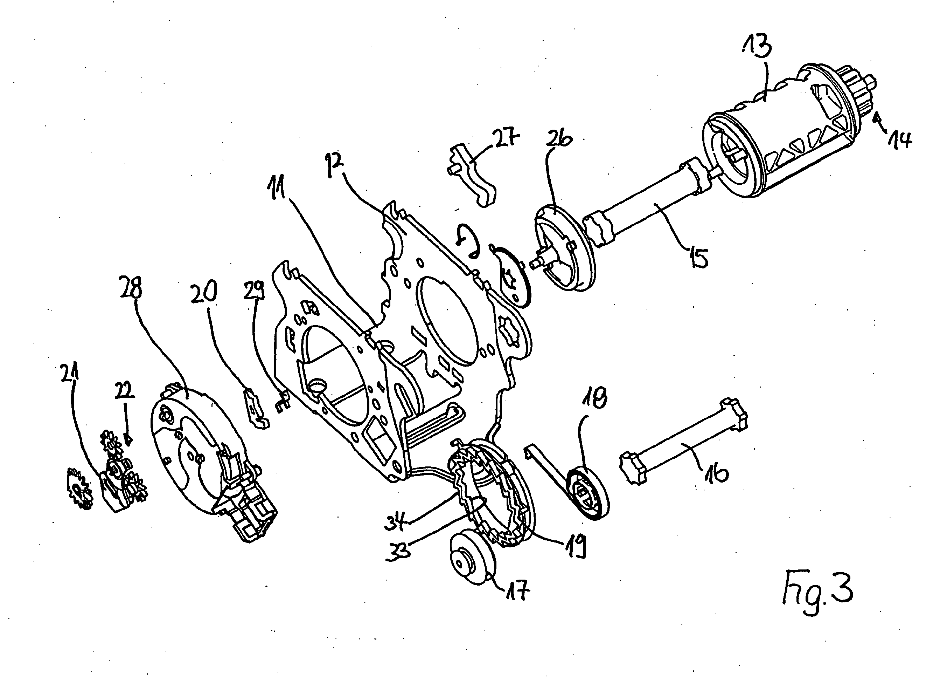

In Figur 3 sind die vorstehend bereits angesprochenen Einzelteile des Sicherheitsgurtaufroller 10 nochmals im einzelnen dargestellt, wobei erkennbar ist, dass an dem in die Lagerplatte 28 eingreifenden Ende der Gurtwelle 13 ein Profilkopf 26 angeordnet und drehfest mit dem im Innern der Gurtwelle 13 verlaufenden Torsionsstab 15 verbunden ist, wobei an dem Profilkopf 26 eine trägheitsgesteuerte Sperrklinke 27 angeordnet ist, die in die an dem Zahnring 19 ausgebildete Innenverzahnung 33 einsteuerbar ist. Dagegen ist die Klinke 20 zum Eingriff in die Außenverzahnung 34 des Zahnringes 19 eingerichtet.

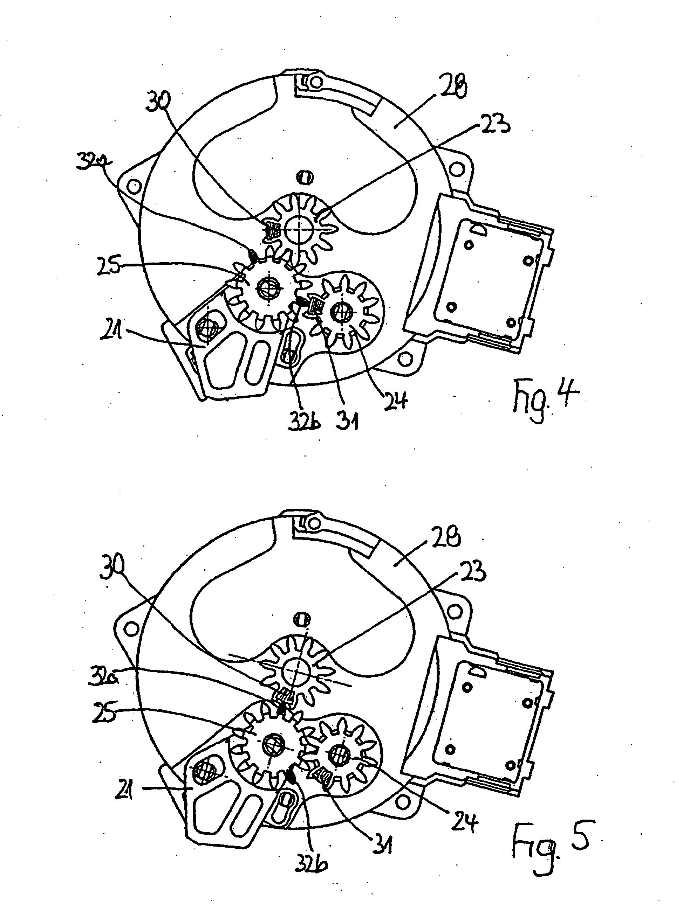

Wie sich aus den Figuren 4 und 5 mit einer vergrößerten Darstellung des Zählgetriebes 22 weiter ergibt, sind die Zahnräder 23, 24, 25 derart zueinander angeordnet, dass das auf der Schaltschwinge 21 gelagerte Zahnrad 25 in jeder der beiden möglichen Schaltstellungen der Schaltschwinge 21 in Kämmeingriff mit dem Wellenzahnrad 23 einerseits und dem an der Lagerplatte 28 gelagerten Zahnrad 24 andererseits bleibt. An den beiden Zahnrädern 23 und 24 ist jeweils ein Schaltnoppen 30 bzw. 31 ausgebildet. An dem auf der Schaltschwinge 21 gelagerten Zahnrad 25 sind dagegen in einem Drehwinkel versetzt zueinander zwei Schaltnoppen 32a, b angeordnet, wobei der Schaltnoppen 32 a in der entsprechenden Stellung des Zählgetriebes 22 auf den Schaltnoppen 30 des Wellenzahnrades 23 trifft (Figur 5), während der Schaltnoppen 32b in einer anderen Stellung der Schaltschwinge 21 auf den Schaltnoppen 31 des an der Lagerplatte gelagerten Zahnrades 24 trifft. Aus einem Vergleich der Figuren 4 und 5 ist dabei erkennbar, dass jeweils bei Auftreffen der beiden Schaltnoppen-Kombinationen die Schaltschwinge 21 entsprechend ihren beiden Schaltstellungen verschwenkt wird. Aufgrund der beiden an dem auf der Schaltschwinge 21 angeordneten Zahnrad 25 befindlichen Schaltnoppen 32a, b kann der jeweilige Schaltpunkt mit einem nur geringen Drehwinkelabstand festgelegt werden, so dass nicht nur ein exakt wiederholbarer Schaltpunkt in der Abwickelrichtung wie auch in der Awfwickelrichtung geschaffen ist, sondern dass die beiden Schaltpunkte auch bezogen auf den Drehwinkel der Gurtwelle 13 sehr eng beieinander liegen.

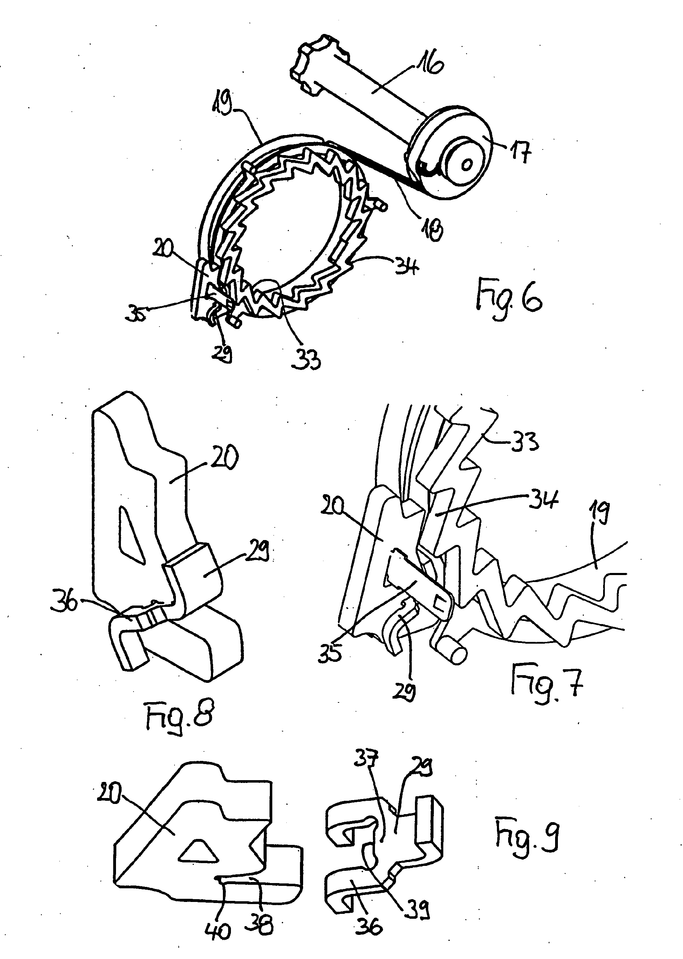

Soweit sich aus Figur 6 im einzelnen das Zusammenwirken des Zahnringes 19 mit dem äußeren Torsionsstab 16 über das Metallband 18 ergibt, ist die Einsteuerung der im Gehäuseschenkel 12 gelagerten Klinke 20 in die Außenverzahnung 34 des Zahnringes 19 in den Figuren 7 bis 9 näher erkennbar. Um die Einsteuerung der Klinke 20 in die Außenverzahnung 34 des Zahnringes 19 auch bei einem sich drehenden Zahnring 19 sicherzustellen, ist eine gesonderte Steuerklinke 29 vorgesehen, die als U-förmiges Bauteil mit seitlichen Schenkeln 36 und einem dazwischen liegenden Verbindungssteg 37 ausgebildet ist, wobei die Klinke 20 eine schlitzförmige Lagerausnehmung 38 aufweist, in die die Steuerklinke 27 mit ihrem Verbindungssteg 37 eingeschoben ist, so dass die seitlichen Schenkel 36 der Steuerklinke 29 die Klinke 20 zwischen sich einfassen. Insofern ist die Steuerklinke 29 selbst unmittelbar drehbar an der Klinke 20 mit einem Bewegungsspiel gelagert. Diese Lagerung ist derart verwirklicht, dass an dem Verbindungssteg 37 der Steuerklinke 29 eine leicht vorspringende Kippkante 39 ausgebildet ist, die in eine Aufnahmenut 40 am Boden der schlitzförmigen Lagerausnehmung 38 der Klinke 20 eingreift, so dass die Steuerklinke 29 mit einem geringen Kraftaufwand in der Klinke 20 beweglich ist. An dem Verbindungssteg 37 ist ein Steuerzahn 42 ausgebildet, der zum Eingriff in die Außenverzahnung 34 des Zahnringes 19 eingerichtet ist. An der Klinke 20 greift eine Blattfeder 35 an, mit der die Klinke 20 in ihre Ruheposition außer Eingriff mit der Außenverzahnung 34 des Zahnringes 33 gehalten ist.

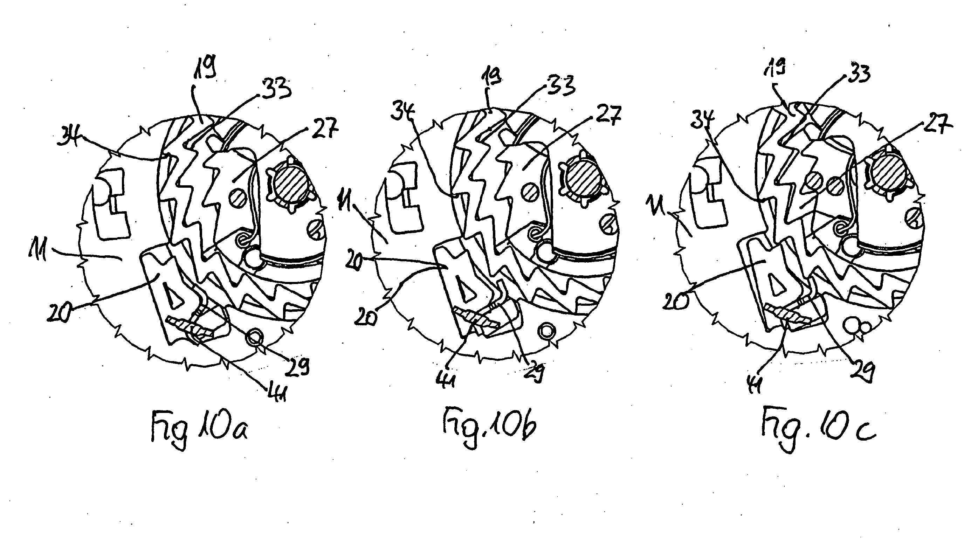

Aus den Figuren 10a - 10c ergibt sich nun die Ausführung der Hin- und Herschaltung zwischen den beiden Kraftbegrenzungsniveaus. Wie sich zunächst aus Figur 10a ergibt, ist die Klinke 20 außer Eingriff mit der Außenverzahnung 34 des Zahnringes 19; das gleiche gilt auch für die Steuerklinke 29, die durch einen an ihr angreifenden Fortsatz 41 der Schaltschwinge 21 in der in Figur 10a dargestellten Position gehalten wird. In dieser Position ist auch die an dem Profilkopf 26 gelagerten Sperrklinke 27 nicht in Eingriff mit der Innenverzahnung 33 des Zahnringes 19. Somit kann sich in dieser Stellung der beteiligten Bauteile zueinander die Gurtwelle 13 frei drehen. Kommt es aber nun zu einer Aussteuerung der Sperrklinke 27 in Eingriff mit der Innenverzahnung des Zahnringes 23, so dreht der Zahnring 19 gemeinsam mit der Gurtwelle in Gurtauszugsrichtung mit, wobei der Zahnring 19 über das an ihm eingehängte Metallband 18 den äußeren Torsionsstab 16 beaufschlagt, so dass das niedrige Kraftbegrenzungselement bei einer Weiterdrehung der Gurtwelle wirksam ist.

In Figur 10b ist eine Stellung der Steuerklinke 29 dargestellt, wie sie bei der von dem Zählgetriebe 22 vorgenommenen Umschaltung der Schaltschwinge 21 vorgenommen wird, wobei der Fortsatz 41 der Schaltschwinge 21 nunmehr die Steuerklinke 29 in den Bewegungsweg der Außenverzahnung 34 des Zahnringes 19 einsteuert, so dass bei beginnender Drehung des Zahnringes 19 die Steuerklinke 29 erfasst und verschwenkt wird, wobei durch die Verschwenkung der Steuerklinke die Klinke 20 ebenfalls eingeschwenkt und definiert in Eingriff mit der Außenverzahnung 34 des Zahnringes 19 gebracht und bei Eingriff entsprechend mitgerissen wird.

In der in Figur 10b dargestellten Funktionsstellung befindet sich aber wiederum die Sperrklinke 27 noch nicht in Eingriff mit der. Innenverzahnung 33 des Zahnringes 19, so dass die Stellung gemäß Figur 10b auch nur diejenige Schaltstellung verdeutlicht, in welcher bei Ansprechen des Blockiersystems und Aussteuerung der Sperrklinke 27 der Zahnring 19 unmittelbar über die Klinke 20 am Gehäuseschenkel 12 beziehungsweise dem Gehäuse 11 kraftübertragend festgelegt wird, so dass in dieser Stellung der zweite außerhalb der Gurtwelle angeordnete Torsionsstab mit dem niedrigen Kraftbegrenzungsniveau nicht wirksam werden kann. Bei in die Außenverzahnung 34 des Zahnringes 19 eingesteuerter Klinke 20 wird vielmehr nur der in der Gurtwelle 13 angeordnete Torsionsstab 15 mit dem hohen Kraftbegrenzungsniveau zugeschaltet. Dieser Zustand ist in einer gewissen Zwischenstelllung, bevor die Klinke 20 vollständig in die Außenverzahnung 34 des Zahnringes 19 eingesteuert ist, in Figur 10c dargestellt; die Klinke 20 ist somit "kupplungsbereit".

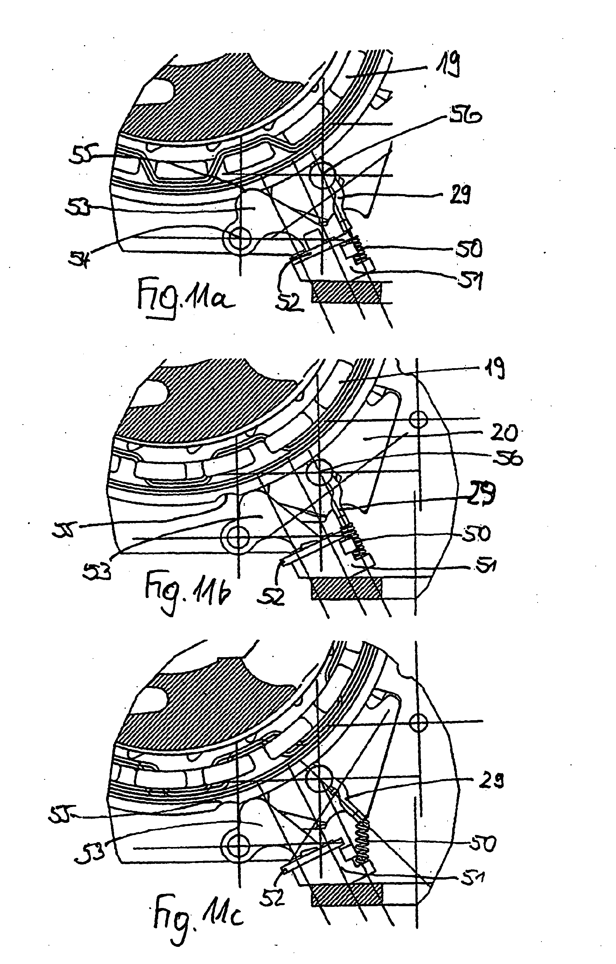

Gemäß dem in den Figuren 11a-c dargestellten Ausführungsbeispiel ist durch die Anordnung einer vorgespannten Feder 50, welche die Steuerklinke 29 in Richtung ihres Eingriffs in die Außenverzahnung 34 des Zahnringes 19 vorspannt, dafür Sorge getragen, dass sich im Falle der Einsteuerung der Steuerklinke 29 in die Verzahnung des Zahnringes 19 eine zusätzliche Schaltkraft beziehungsweise ein zusätzliches Drehmoment ergibt. Hierzu ist das Ende der Steuerklinke 29 von der vorgespannten Feder 50 beaufschlagt, die sich in einem am Gurtaufrollergehäuse 11 angebrachten Federwiderlager 51 abstützt. Die vorgespannte Feder 50 ist dabei bezüglich der Steuerklinke 29 so angeordnet und ausgerichtet, dass die Kraftlinie der Federkraft in der Freigabestellung der Steuerklinke 29 für den Zahnring 19 über die Drehlagerung 56 der Steuerklinke 29 an der Klinke 20 verläuft, so dass die vorgespannte Feder 50 in dieser Ruhestellung der Steuerklinke 29 kein zusätzliches Moment aufbringt, welches von der zugeordneten Haltevorrichtung aufgenommen werden müsste. Diese Haltevorrichtung besteht aus einer an dem Federwiderlager 51 verschiebbar geführten Kulisse 52, welche in der in Figur 11a dargestellten Ausgangsstellung die vorgespannte Feder 50 festlegt. Die Kulisse 52 wirkt ihrerseits mit einem um einen Drehpunkt 54 drehbar gelagerten Haltehebel 53 zusammen, der sich mit einem Hebelarm in einer am Zahnring 19 ausgebildeten Ausnehmung 55 formschlüssig abstüzt. Somit ist in der in Figur 11a dargestellten Stellung die Steuerklinke 29 in ihrer Nichteingriffsstellung mit der Außenverzahnung 34 des Zahnringes 19 gehalten.

Kommt es nun in einem entsprechenden Beanspruchungsfall zu einer anfänglichen Drehung des Zahnringes 19, so führt diese Verdrehung des Zahnringes 19 dazu, dass der Haltehebel 53 aus der Ausnehmung 55 des Zahnringes 19 freikommt, sich dadurch verschwenkt und die Kulisse 52 in dem Federwiderlager 51 derart verschiebt, dass die vorgespannte Feder 50 freigegeben ist und somit nun die Steuerkli-nke 29 beaufschlagt. Diese Funktionsstellung ist in Figur 11b dargestellt.

Soweit aufgrund der Stellung des Zählgetriebes 22 entsprechend der zu Figur 10b erfolgten Beschreibung die Steuerklinke 29 in den Bewegungsweg der Außenverzahnung 34 des Zahnringes 19 eingesteuert und bei beginnender Drehung des Zahnringes 19 erfasst und verschwenkt wird, so wird diese durch Verschwenkung der Steuerklinke 29 eingeleitete Einsteuerbewegung der Steuerklinke 29 durch die ausknickende und dadurch ein zusätzliches Drehmoment auf die Steuerklinke 29 ausübende vorgespannte Feder 50 unterstützt. Auf diese Weise wird einerseits der Schaltvorgang unumkehrbar gemacht, weil die Steuerklinke auch unter der Wirkung der vorgespannten Feder 50 in Eingriff mit der Außenverzahnung des Zahnringes gehalten ist, und gleichzeitig wirkt dadurch die Steuerklinke 29 als Rücklaufsperre für den Zahnring 19.

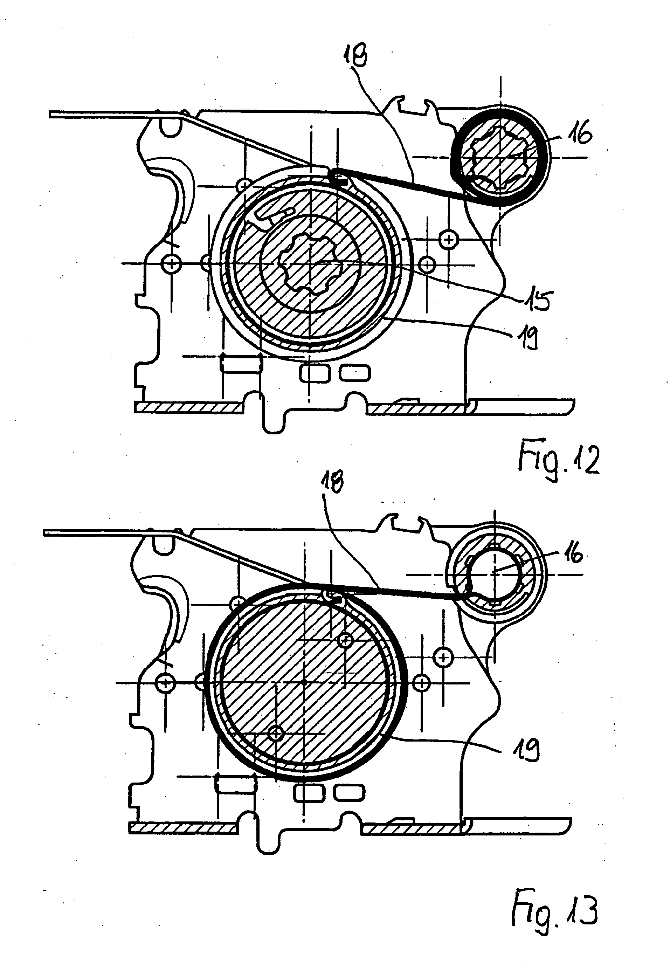

Aus Figuren 12 und 13 ergibt sich nochmals die Verbindung des zweiten außerhalb der Gurtwelle 13 angeordneten Torsionsstabes 16 mit dem niedrigen Kraftbegrenzungsniveau und dem Zahnring 19 über das Metallband 18. Gemäß Figur 12 ist erkennbar, dass bei einer Drehung des Zahnringes 19 das Metallband 18 von der Wickelrolle 17 abgewickelt wird, die aufgrund ihrer drehfesten Verbindung mit dem Torsionsstab 16 diesen Torsionsstab unter Kraftaufnahme tordiert. Ist gemäß Figur 13 das Metallband 18 vollständig von der Wickelrolle 17 abgewickelt, so ergibt sich aufgrund der kraftübertragenden Befestigung des Metallbandes 18 an dem Torsionsstab 16 ein starres System hinsichtlich der Kraftübertragung über den drehbaren Zahnring 19.

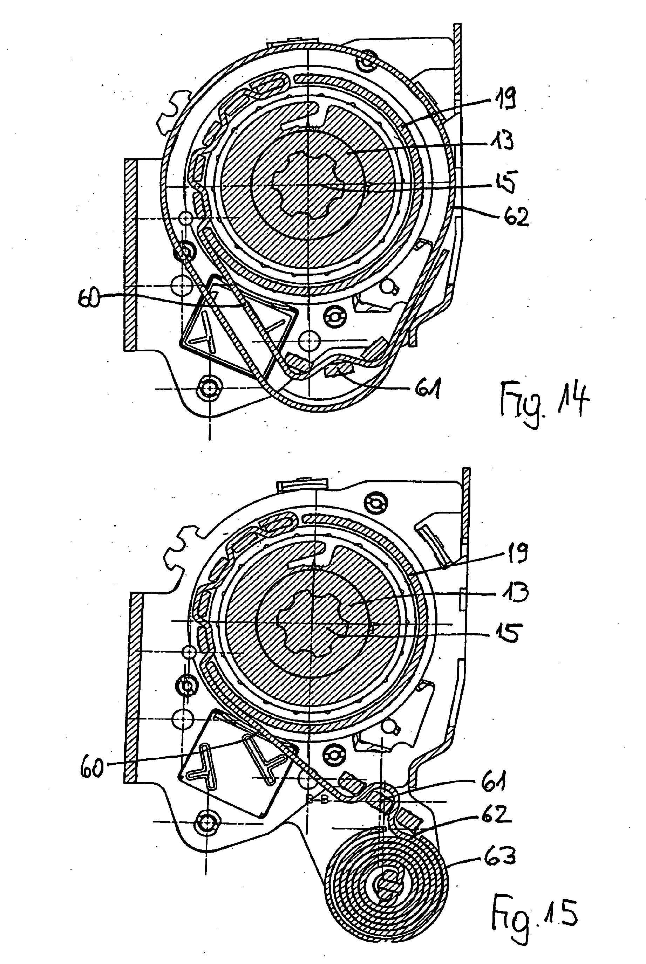

Soweit in Figuren 14 und 15 ein anderes Ausführungsbeispiel für die Anordnung eines ein niedrigeres Kraftbegrenzungsniveau aufweisenden Kraftbegrenzungselementes dargestellt ist, vollzieht sich die Funktion des selbstsperrenden Gurtaufrollers als solchem wie vorstehend beschrieben. Bei dem in den Figuren 14 und 15 dargestellten Ausführungsbeispiel ist lediglich der das geringere Kraftbegrenzungsniveau aufweisende, zusätzliche Torsionsstab ersetzt durch eine Biegebremse. Diese Biegebremse besteht aus einem Zugelement 60, vorzugsweise in Form eines aus einem geeigneten Material bestehenden Metallbandes, welches mit seinem einen Ende an dem Zahnring 19 eingehängt und durch eine gehäusefest angeordnete Schikane 61 geführt ist. Mit einem freien Ende 62, welches einen Vorrat für die Durchzugsbewegung des Zugelementes 60 durch die Schikane 61 bildet, überragt das Zugelement 60 die Schikane 61. Bei dem in Figur 14 dargestellten Ausführungsbeispiel ist das freie Ende 62 des Zugelementes 60 im Anschluss an die Schikane 61 außen um den drehbaren Zahnring 19 herumgelegt und steht somit als Vorrat zur Verfügung. Bei dem in Figur 15 dargestellten Ausführungsbeispiel ist dieses freie Ende 62 in einem gesonderten, am Gurtaufrollergehäuse 11 drehbar angeordneten Vorratsgehäuse 63 eingelegt und bei Drehung des Zahnringes 19 daraus ausziehbar.

Nachstehend wird die Funktion des erfindungsgemäßen Gurtaufrollers unter Bezugnahme auf die vorstehenden Erläuterungen der Funktionen seiner Einzelteile nochmals beschrieben.

Legt ein Insasse das nicht dargestellte, auf der Gurtwelle 13 des Sicherheitsgurtaufrollers 10 aufgewickelte Gurtband an und zieht dieses daher von der Gurtwelle 13 ab, so wird das Maß des Gurtauszuges von dem Zählgetriebe 22 aufgenommen, wobei nach einer entsprechenden Umdrehungszahl der Gurtwelle der auf dem Wellenzahnrad 23 befindliche Schaltnoppen 30 auf den Schaltnoppen 32a des auf der Schaltschwinge 21 gelagerten Zahnrades 25 trifft und bei Erreichen dieses Schaltpunktes die Schaltschwinge 21 in eine Stellung schaltet, wie sie in Figur 10b dargestellt ist. Das Erreichen des Schaltpunktes beim Gurtbandauszug bedeuten nämlich, dass sich ein entsprechend großer Insasse anschnallt, der entsprechend viel Gurtband benötigt. Für einen solchen großen Insassen soll in einem Unfall nur das große Kraftbegrenzungsniveau gelten, so dass bei Erreichen des vorgeschriebenen Schaltpunktes die Steuerklinke 29 in den Drehweg der Außenverzahnung 34 des Zahnringes 19 gebracht ist. Kommt es im Unfall zu einer Kopplung von Gurtwelle 13 und Zahnring 19 durch Eingriff der am Profilkopf 26 gelagerten Sperrklinke 27 in die Innenverzahnung 33 des Zahnringes 19, so betätigt der Zahnring 19 die Steuerklinke 29, die daraufhin die Klinke 20 in die Außenverzahnung 34 des Zahnringes 19 einsteuert, so dass der Zahnring am Gehäuse 11 festgelegt ist. In dieser Stellung kann der zweite Torsionsstab 16 beziehungsweise das Zugelement 60 mit niedrigem Kraftbegrenzungsniveau nicht wirksam werden. Soweit das Ausführungsbeispiel gemäß Figuren 11a-c verwirklicht ist, wird die dynamische Einsteuerung der Steuerklinke 29 mit Klinke 20 in die Außenverzahnung 34 des Zahnringes 19 durch die vorgespannte Feder 50 unterstützt.

Legt dagegen ein kleinerer Insasse den Sicherheitsgurt an, so wird durch den entsprechenden Gurtauszug der angesprochene Schaltpunkt zwischen den Schaltnoppen 30 und 32a nicht erreicht, so dass die Schaltschwinge 21 in einer Stellung verbleibt, in welcher sie gemäß Figur 10a die Steuerklinke 29 außer Eingriff mit der Außenverzahnung 34 des Zahnringes 19 hält. In dieser Stellung kann sich der Zahnring 19 nun bei einer Ankopplung an die Gurtwelle 13 durch eine im Unfallgeschehen erfolgende Aussteuerung der Sperrklinke 27 in die Innenverzahnung 33 des Zahnringes 19 nun gegenüber dem Gehäuse drehen und wickelt dabei das Metallband 18 von der Wickelrolle 17 ab; die Drehung der Wickelrolle 17 führt zu einer kraftaufnehmenden Tordierung des Torsionsstabes 16. Da das Kraftbegrenzungsniveau des Torsionsstabes 16 geringer ausgelegt ist als das Kraftbegrenzungsniveau des Torsionsstabes 15 der Gurtwelle 13 wirkt bei drehbarem Zahnring 19 nur das geringe Kraftbegrenzungsniveau, welches für einen kleineren Insassen angemessen und vorgesehen ist. Entsprechendes gilt für die Anordnung des Zugelementes 60 als Kraftbegrenzungselement.

Hat ein Insasse beim Anschnallvorgang so viel Gurtband benötigt, dass der entsprechende Schaltpunkt des Zählgetriebes 22 noch nicht erreicht ist, verbleibt es zunächst bei der vorstehend zu Figur 10a beschriebenen Stellung. Soweit sich aber ein solchermaßen angeschnallter Insasse nun bewegt, sich beispielsweise vorbeugt, wird mehr Gurtband ausgezogen, und sofern dieser Gurtbandauszug den entsprechend eingestellten Schaltpunkt zwischen Schaltnoppen 30 und Schaltnoppen 32a überschreitet, wird auch für diesen, gegebenenfalls nur kurzzeitigen Zustand die Schaltschwinge 21 umgeschaltet und insoweit eine Schaltbereitschaft hinsichtlich des Zuschaltens lediglich des Torsionsstabes 15 herbeigeführt. Richtet sich in einem solchen Fall der Insasse wieder auf, so führt der Gurteinlauf verbunden mit einer Rückdrehung der Gurtwelle 13 dazu, dass nun der Schaltnoppen 32b des auf der Schaltschwinge 21 angeordneten Zahnrades 25 auf den Schaltnoppen 31 des an der Lagerplatte 28 angeordneten Zahnrades 24 trifft, und dies führt zu einer erneuten Schaltbewegung der Schaltschwinge 21 in ihre Position, in der die Schaltschwinge 21 entsprechend Figur 10a die Steuerklinke 29 außer Eingriff mit dem Zahnring 19 hält, so dass der Zahnring wiederum frei drehbar ist. Dieses Hin- und Herschalten ist für den angeschnallten Insassen nicht fühlbar stellt aber sicher, dass je nach der im Augenblick des Unfalls herrschenden Sitzposition auch bei kleineren Insassen entweder das geringe Kraftbegrenzungsniveau oder von vorneherein das hohe Kraftbegrenzungsniveau eingeschaltet ist, um im letzteren Fall eine zu große Vorverlagerung des Insassen zu vermeiden.

Ein entsprechender Schaltzustand kann aber auch eintreten, wenn im Falle eines Unfalls der mit dem Wirksamwerden des zweiten Torsionsstabes 16 verbundene Gurtauslass dazu führt, dass der Schaltpunkt überschritten wird, wobei sich in diesem Fall auch ein zunächst dem geringen Kraftbegrenzungsniveau unterworfener Insasse einem Fahrzeugteil möglicherweise unzulässig nähert. Auch in einem solchen Fall kann insbesondere aufgrund der Ausbildung der Steuerklinke 29 die Klinke 20 in den sich drehenden Zahnring 19 eingesteuert und somit das hohe Kraftbegrenzungsniveau entsprechend Figur 10c eingeschaltet werden.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Sicherheitsgurtaufroller (10) für Kraftfahrzeuge mit einer fahrzeugsensitiv und/oder gurtbandsensitiv ansteuerbaren Blockiervorrichtung für die Gurtwelle (13), mit einem Profilkopf (26) als Träger eines zur Verriegelung der Gurtwelle (13) mit dem Gehäuse (12) beweglich angeordneten Sperrgliedes und mit einer zweistufig ausgebildeten und zwei in Reihe hintereinander geschaltete Kraftbegrenzungselemente (15, 16) aufweisenden Kraftbegrenzungsvorrichtung, wobei die Kraftbegrenzungselemente (15, 16) über eine zwischengeschaltete und mittels einer Steuervorrichtung ansteuerbaren Kupplung (19, 20) zwischen einem hohen Kraftbegrenzungsniveau und einem niedrigen Kraftbegrenzungsniveau schaltbar sind, **dadurch gekennzeichnet, daß** die Steuervorrichtung für das Umschalten der Kupplung (19, 20) zwischen dem hohen Kraftbegrenzungsniveau und dem niedrigen Kraftbegrenzungsniveau aus einem das Mass des jeweiligen Gurtbandauszuges von der Gurtwelle (13) feststellenden Zählgetriebe (22) besteht und die Kupplung (19, 20) reversibel zwischen dem hohen Kraftbegrenzungsniveau und dem niedrigen Kraftbegrenzungsniveau hin- und herschaltbar ist.

2. Sicherheitsgurtaufroller nach Anspruch 1, **dadurch gekennzeichnet, daß** die Kupplung aus einem am Gehäuse (11) des Gurtaufrollers (10) drehbar gelagerten und im Blockierfall von dem Sperrglied (27) des Profilkopfes (26) in Eingriff genommenen Zahnring (19) und aus einer von der Steuervorrichtung (22) zwischen zwei Schaltstellungen hin und her bewegbaren Klinke (20) besteht, mittels der der Zahnring (19) in der einen Schaltstellung freigegeben und in der anderen Schaltstellung gehäusefest verriegelt ist.

3. Sicherheitsgurtaufroller nach Anspruch 1 oder 2, **dadurch gekennzeichnet, daß** die Kraftbegrenzungselemente (15, 16) bezüglich des Zahnringes (19) derart angeordnet sind, daß die erste Kraftbegrenzungsstufe mit dem niedrigen Kraftbegrenzungsniveau bei gegenüber dem Gehäuse (11) drehbaren Zahnring (19) und die zweite Kraftbegrenzungsstufe mit dem hohen Kraftbegrenzungsniveau bei durch die von der Steuervorrichtung (22) in Eingriff mit dem Zahnring (19) angesteuerte Klinke (20) gehäusefest festgelegten Zahnring (19) verwirklicht ist.

4. Sicherheitsgurtaufroller nach Anspruch 2 oder 3, **dadurch gekennzeichnet, daß** das das niedrige Kraftbegrenzungsniveau festlegende Kraftbegrenzungselement ein außerhalb der Gurtwelle (13) im Gurtaufrollergehäuse (11) angeordneter Torsionsstab (16) ist, dessen eines Ende gehäusefest eingespannt und dessen anderes Ende über ein Verbindungsmittel (18) an den Zahnring (19) angeschlossen ist derart, daß die Drehung des Zahnringes (19) in eine Tordierung des Torsionsstabes (16) umsetzbar ist.

5. Sicherheitsgurtaufroller nach Anspruch 4, **dadurch gekennzeichnet, daß** das Verbindungsmittel aus einem Metallband (18) mit vorgegebener Länge besteht, dessen eines Ende an dem Zahnring (19) eingehängt und dessen anderes Ende auf einer drehfest mit dem Torsionsstab (16) verbundenen, drehbar am Gurtaufrollergehäuse angeordneten Wickelrolle (17) aufgewickelt und endseitig daran befestigt ist.

6. Sicherheitsgurtaufroller nach Anspruch 2 oder 3, **dadurch gekennzeichnet, dass** das das niedrige Kraftbegrenzungsniveau festlegende Kraftbegrenzungselement eine außerhalb der Gurtwelle (13) am Gurtaufrollergehäuse (11) angeordnete Biegebremse mit einem durch eine gehäusefest angeordnete Schikane (61) geführten Zugelement (60) ist, welches mit seinem einen Ende an dem Zahnring (19) angeschlossen ist derart, dass die Drehung des Zahnringes (19) in ein energieaufnehmendes Durchziehen des Zugelementes (60) durch die Schikane (61) umsetzbar ist.

7. Sicherheitsgurtaufroller nach Anspruch 6, **dadurch gekennzeichnet, dass** das freie, einen Vorrat bildende Ende (62) des Zugelementes (60) außen um den Zahnring (19) verlaufend angeordnet ist.

8. Sicherheitsgurtaufroller nach Anspruch 6, **dadurch gekennzeichnet, dass** das freie, einen Vorrat bildenden Ende (62) des Zugelementes (60) in einem drehbar an dem Gurtaufrollergehäuse (11) gelagerten Vorratsgehäuse (63) angeordnet und aus dem Vorratsgehäuse (63) ausziehbar ist.

9. Sicherheitsgurtaufroller nach einem der Ansprüche 6 bis 8, **dadurch gekennzeichnet, dass** das Zugelement (60) über seine Länge eine gleich bleibende Breite aufweist.

10. Sicherheitsgurtaufroller nach einem der Ansprüche 6 bis 8, **dadurch gekennzeichnet, dass** das Zugelement (60) über seine Länge eine in Abhängigkeit von der gewünschten Änderung des Kraftbegrenzungsniveaus unterschiedliche Breite aufweist.

11. Sicherheitsgurtaufroller nach einem der Ansprüche 1 bis 10, **dadurch gekennzeichnet, daß** das Zählgetriebe (22) aus einem mit der Gurtwelle (13) verbundenen außenverzahnten Zahnrad (23), einem weiteren, gehäusefest angeordneten außenverzahnten Zahnrad (24) und einem auf einer schwenkbar in zwei Schaltstellungen am Gehäuse gelagerten Schaltschwinge (21) angeordneten dritten außenverzahnten Zahnrad (25) besteht, wobei alle drei Zahnräder (23, 24, 25) in Kämmeingriff miteinander stehen und auf den Zahnrädern (23, 24, 25) jeweils die Schaltpunkte für die Schaltschwinge (21) festlegende Schaltnoppen (30, 31, 32a, b) angeordnet sind, welche bei vorgegebenem Abwickelzustand in gegenseitigen Anschlag gelangen und **dadurch** die Schaltschwinge (21) zwischen den Schaltstellungen verschwenken.

12. Sicherheitsgurtaufroller nach Anspruch 11, **dadurch gekennzeichnet, dass** das mit der Gurtwelle (13) verbundene Zahnrad (23) sowie das am Gehäuse gelagerte Zahnrad (24) jeweils einen Schaltnoppen (30, 31) und das auf der Schaltschwinge (21) gelagerte Zahnrad (25) zwei Schaltnoppen (32a, b) zur Begrenzung der Schalthysterese aufweisen.

13. Sicherheitsgurtaufroller nach Anspruch 11 oder 12, **dadurch gekennzeichnet, dass** die Schaltschwinge (21) die Klinke (20) über eine mechanische Verbindung unmittelbar ansteuert.

14. Sicherheitsgurtaufroller nach Anpruch 11 oder 12, **dadurch gekennzeichnet, dass** die Schaltschwinge (21) die Klinke (20) mittelbar über einen zwischengeschalteten Elektroschalter ansteuert.

15. Sicherheitsgurtaufroller nach Anspruch 11 oder 12, **dadurch gekennzeichnet, dass** die Schaltschwinge (21) die Klinke (20) mittelbar über einen zwischengeschalteten Pneumatikschalter ansteuert.

16. Sicherheitsgurtaufroller nach einem der Ansprüche 1 bis 13, **dadurch gekennzeichnet, dass** an der Klinke (20) eine relativ dazu bewegliche und mit der Schaltschwinge (21) zusammenwirkende Steuerklinke (29) angeordnet ist, die einen mit der Außenverzahnung (34) des Zahnringes (19) zusammenwirkenden Steuerzahn (42) aufweist.

17. Sicherheitsgurtaufroller nach Anspruch 16, **dadurch gekennzeichnet, dass** die Klinke (20) eine schlitzförmige Lagerausnehmung (38) für die U-förmig ausgebildete und mit ihrem Verbindungssteg (37) in die Lagerausnehmung (38) mit Bewegungsspiel eingesetzte Steuerklinke (29) aufweist.

18. Sicherheitsgurtaufroller nach Anspruch 16 oder 17, **dadurch gekennzeichnet, dass** die Klinke (20) in ihre Freigabestellung für den Zahnring (19) mittels einer Feder (35) vorgespannt ist.

19. Sicherheitsgurtaufroller nach einem der Ansprüche 16 bis 18, **dadurch gekennzeichnet, dass** die Steuerklinke (29) von einer vorgespannten Feder (50) in Richtung des Eingriffs in die Außenverzahnung (34) des Zahnringes (19) beaufschlagt und die vorgespannte Feder (50) in der Freigabestellung der Steuerklinke (29) für den Zahnring (19) mittels einer gesondert schaltbaren Haltevorrichtung (52, 53) festgelegt ist, die bei Einsteuerung der Steuerklinke (29) in die Außenverzahnung (34) des Zahnringes (19) des vorgespannte Feder (50) freigibt.

20. Sicherheitsgurtaufroller nach Anspruch 19, **dadurch gekennzeichnet, dass** die Haltevorrichtung aus einer relativ zur vorgespannten Feder (50) zwischen einer Haltestellung und einer Freigabestellung beweglichen Kulisse (52) besteht.

21. Sicherheitsgurtaufroller nach Anspruch 20, **dadurch gekennzeichnet, dass** die Kulisse (52) in der Haltestellung durch einen Haltehebel (53) gehalten ist, der sich formschlüssig in einer am Zahnring (19) ausgebildeten Ausnehmung (55) abstützt und bei Verdrehung des Zahnringes (19) von dem Zahnring (19) freikommt.

22. Sicherheitsgurtaufroller nach einem der Ansprüche 19 bis 21, **dadurch gekennzeichnet, dass** die vorgespannte Feder (50) derart angeordnet und ausgerichtet ist, dass die Kraftlinie der Federkraft in der Freigabestellung der Steuerklinke (29) für den Zahnring (19) über die Drehlagerung (56) der Steuerklinke (29) an der Klinke (20) verläuft und bei verschwenkter Steuerklinke (29) aufgrund ihrer Ausknickung ein Drehmoment in Einsteuerrichtung der Steuerklinke (29) in den Zahnring (19) erzeugt.

## Claims

1. A seat belt retractor (10) for motor vehicles, comprising a vehicle-sensitive and/or belt webbing-sensitive controllable locking device for the belt shaft (13), with the retractor comprising a profiled head (26) that acts as a support for a displaceably mounted locking member that locks the belt shaft (13) in the housing (12), and a two-stage force limiting device that is equipped with two force limiting elements (15, 16) connected in series, the force limiting elements (15, 16) being switchable between a high level and a low level of force limitation via an interposed coupling (19, 20) that is controlled by means of a control device, **characterized in that** the control device for switching the coupling (19, 20) between the high level and the low level of force limitation comprises a counter gear (22), which determines the amount of the respective belt webbing that is extended from the belt shaft (13), and that the coupling (19, 20) can be reversibly switched back and forth between the high and the low levels of force limitation.

2. The seat belt retractor according to claim 1, **characterized in that** the coupling comprises a toothed ring (19), which is rotatably mounted on the housing (11) of the belt retractor (10) and when locked can be engaged by the locking member (27) of the profiled head (26) and which comprises a catch (20) that can be displaced back and forth between two switching positions by the control device (22), with the catch releasing the toothed ring (19) in the one switching position and locking it to the housing in the other switching position.

3. The seat belt retractor according to claim 1 or 2, **characterized in that** the force limiting elements (15, 16) are disposed with respect to the toothed ring (19) such that the first force limiting stage having the low level of force limitation is implemented by a toothed ring (19) that can rotate in relation to the housing (11), and the second force limiting stage having the high level of force limitation is implemented by the catch (20), which is controlled by the control device (22) when engaged in the toothed ring (19), in the toothed ring (19) that is fixed to the housing.

4. The seat belt retractor according to claim 2 or 3, **characterized in that** the force limiting element defining the low level of force limitation is a torsion rod (16), which is positioned in the belt retractor housing (11) outside of the belt shaft (13), one end of the rod being fixing with the housing and the other end being attached to the toothed ring (19) by means of a connecting means (18) such that the revolution of the toothed ring (19) can be translated into a twisting motion of the torsion rod (16).

5. The seat belt retractor according to claim 4, **characterized in that** the connecting means is made of a metal band (18) having a predetermined length, one end of which is attached to the toothed ring (19) and the other end of which is wound and attached to a winding spool (17), which is fixed to the torsion rod (16) and rotatably disposed on the belt retractor housing.

6. The seat belt retractor according to claim 2 or 3, **characterized in that** the force limiting element defining the low level of force limitation is a bending brake that is positioned on the belt retractor housing (11) outside of the belt shaft (13) and comprises a pulling element (60), which is guided through a baffle (61) fixed to the housing and has one end attached to the toothed ring (19) such that the revolution of the toothed ring (19) can be translated by the baffle (61) into an energy-absorbing pull-through of the pulling element (60).

7. The seat belt retractor according to claim 6, **characterized in that** the free end (62), which forms a reserve, of the pulling element (60) is disposed on the outside around the toothed ring (19).

8. The seat belt retractor according to claim 6, **characterized in that** the free end (62), which forms a reserve, of the pulling element (60) is disposed in a storage housing (63), which is rotatably mounted on the belt retractor housing (11), and can be pulled out of the storage housing (63).

9. A seat belt retractor according to any one of the claims 6 or 8, **characterized in that** the width of the pulling element (60) remains the same across the entire length.

10. A seat belt retractor according to any one of the claims 6 to 8, **characterized in that** the width of the pulling element (60) varies across the length thereof as a function of the desired change on the level of force limitation.

11. A seat belt retractor according to any one of the claims 1 to 10, **characterized in that** the counter gear (22) comprised an externally toothed gear wheel (23) that is connected to the belt shaft (13) a further externally toothed gear wheel (24) that is fixed to the housing, and a third externally toothed gear wheel (25) disposed on a rocker arm (21), which is pivotably mounted on the housing in two switching positions, wherein all three gear wheels (23, 24, 25) mesh with one another and the gear wheels (23, 24, 25) are provided with switching lugs (30, 31, 32a, b) defining the switching points for the rocker arm (21), wherein the lugs in the predetermined unwinding state come in contact with each other and thereby pivot the rocker arm (21) between the switching positions.

12. The seat belt retractor according to claim 11, **characterized in that** the gear wheel (23) that is connected to the belt shaft (13) and the gear wheel (24) mounted on the housing each comprise a switching lug (30, 31) and that the gear wheel (25) mounted on the rocker arm (21) comprises two switching lugs (32a, b) to restrict the switching hysteresis.

13. The seat belt retractor according to claim 11 or 12, **characterized in that** the rocker arm (21) directly controls the catch (20) via a mechanical connection.

14. The seat belt retractor according to claim 11 or 12, **characterized in that** the rocker arm (21) indirectly controls the catch (20) via an interposed electrical switch.

15. The seat belt retractor according to claim 11 or 12, **characterized in that** the rocker arm (21) directly controls the catch (20) via an interposed pneumatic switch.

16. A seat belt retractor according to any one of the claims 1 to 13, **characterized in that** a control catch (29) is positioned on the catch (20) relatively displaceably thereto and interacting with the rocker arm (21), the control catch having a control cog (42) that interacts with the outer gearing (34) of the toothed ring (19).

17. The seat belt retractor according to claim 16, **characterized in that** the catch (20) has a slotted mounting recess (38) for the U-shaped control catch (29), which with the connecting member (37) thereof is inserted in the mounting recess (38) while maintaining clearance for movement.

18. The seat belt retractor according to claim 16 or 17, **characterized in that** the catch (20) in the release position thereof for the toothed ring (19) is pretensioned by means of a spring (35).

19. A seat belt retractor according to any one of the claims 16 to 18, **characterized in that** a control catch (29) is tensioned by a pretensioned spring (50) in the direction of the engagement in the outer gearing (34) of toothed ring (19) and that the pretensioned spring (50) is fixed in the release position of the control catch (29) for the toothed ring (19) by means of a separately controlled holding device (52, 53), which releases the pretensioned spring (50) when the control catch (29) engages in the outer gearing (34) of the toothed ring (19).

20. The seat belt retractor according to claim 19, **characterized in that** the holding device comprises a gate (52) that is displaceable relative to the pretensioned spring (50) between a holding position and a release position.

21. The seat belt retractor according to claim 20, **characterized in that** the locking position of the gate (52) is maintained by a holding lever (53), which rests positively in a recess (55) formed on the toothed ring (19) and is released from the toothed ring (19) when the toothed ring (19) is rotated.

22. A seat belt retractor according to any one of the claims 19 to 21, **characterized in that** the pretensioned spring (50) is disposed and oriented such that the line of force of the spring force in the release position of the control catch (29) for the toothed ring (19) extends via the pivot bearing (56) of the control catch (29) on the catch (20) and, when the control catch (29) is pivoted, due to buckling produces a torque in the engagement direction of the control catch (29) in the toothed ring (19).

## Revendications

1. Enrouleur de ceinture de sécurité (10) pour véhicules automobiles, comportant un dispositif de blocage pour l'arbre d'enroulement (13), actionnable par réaction sensible au véhicule et/ou par réaction sensible à la ceinture, comportant une tête profilée (26) formant un support pour un organe de verrouillage, monté mobile avec le boîtier (12) et destiné au verrouillage de l'arbre d'enroulement (13), et comportant un limiteur d'efforts, réalisé avec deux niveaux et muni de deux éléments limiteurs d'efforts (15, 16) montés en série l'un derrière l'autre, les éléments limiteurs d'efforts (15, 16) pouvant être commutés, par l'intermédiaire d'un système de couplage (19, 20) interposé et actionnable par un dispositif de commande, entre un niveau élevé de limitation d'effort et un niveau faible de limitation d'effort, **caractérisé en ce que** le dispositif de commande, destiné à commuter le système de couplage (19, 20) entre un niveau élevé de limitation d'effort et un niveau faible de limitation d'effort, est formé par un engrenage de comptage (22), détectant la valeur du déroulement respectif de la ceinture par l'arbre d'enroulement (13), et le système de couplage (19, 20) est apte à être commuté en va-et-vient de manière réversible entre le niveau élevé de limitation d'effort et le niveau faible de limitation d'effort.

2. Enrouleur de ceinture de sécurité selon la revendication 1, **caractérisé en ce que** le système de couplage est formé par une bague dentée (19), montée rotative sur le boîtier (11) de l'enrouleur de ceinture de sécurité (10) et venant en prise, en cas de blocage, avec l'organe de verrouillage (27) de la tête profilée (26), et par un cliquet (20), qui est apte à être déplacé en va-et-vient par le dispositif de commande (22) entre deux positions de commutation et au moyen duquel la bague dentée (19) est libérée dans l'une des positions de commutation et est bloquée de manière fixe sur le boîtier dans l'autre position de commutation.

3. Enrouleur de ceinture de sécurité selon la revendication 1 ou 2, **caractérisé en ce que** les éléments limiteurs d'efforts (15, 16) sont disposés par rapport à la bague dentée (19) de telle sorte que le premier niveau de limitation d'effort avec le niveau faible de limitation d'effort est réalisé lorsque la bague dentée (19) est apte à tourner par rapport au boîtier (11), et le deuxième niveau de limitation d'effort avec le niveau élevé de limitation d'effort est réalisé lorsque la bague dentée (19) est immobilisée de manière fixe sur le boîtier par le cliquet (20) commandé par le dispositif de commande (22) pour venir en prise avec la bague dentée (19).

4. Enrouleur de ceinture de sécurité selon la revendication 2 ou 3, **caractérisé en ce que** l'élément limiteur d'efforts définissant le niveau faible de limitation d'effort est une barre de torsion (16), qui est montée en dehors de l'arbre d'enroulement (13) dans le boîtier (11) de l'enrouleur de ceinture et dont une extrémité est bloquée de manière fixe sur le boîtier et dont l'autre extrémité est raccordée à la bague dentée (19) par un moyen de jonction (18), de telle sorte que la rotation de la bague dentée (19) peut se transformer en une torsion de la barre de torsion (16).

5. Enrouleur de ceinture de sécurité selon la revendication 4, **caractérisé en ce que** le moyen de jonction est formé par une bande métallique (18) avec une longueur prédéfinie, dont une extrémité est accrochée à la bague dentée (19) et dont l'autre extrémité est enroulée sur un rouleau d'enroulement (17), relié solidaire en rotation avec la barre de torsion (16) et monté rotatif sur le boîtier de l'enrouleur de ceinture, et est fixée audit rouleau du côté extrémité.

6. Enrouleur de ceinture de sécurité selon la revendication 2 ou 3, **caractérisé en ce que** l'élément limiteur d'efforts définissant le niveau faible de limitation d'effort est un frein de flexion, monté en dehors de l'arbre d'enroulement (13) sur le boîtier (11) de l'enrouleur de ceinture et muni d'un élément de traction (60), qui est guidé à travers une chicane (61), montée fixe sur le boîtier, et qui est raccordé avec une de ses extrémités à la bague dentée (19), de telle sorte que la rotation de la bague dentée (19) peut se transformer en une traction, absorbant de l'énergie, de l'élément de traction (60) à travers la chicane (61).

7. Enrouleur de ceinture de sécurité selon la revendication 6, **caractérisé en ce que** l'extrémité libre (62) de l'élément de traction (60), formant une réserve, est disposée à l'extérieur en s'étendant autour de la bague dentée (19).

8. Enrouleur de ceinture de sécurité selon la revendication 6, **caractérisé en ce que** l'extrémité libre (62) de l'élément de traction (60), formant une réserve, est disposée dans un boîtier de réserve (63), monté rotatif sur le boîtier (11) de l'enrouleur de ceinture, et peut être tirée hors du boîtier de réserve (63).

9. Enrouleur de ceinture de sécurité selon l'une quelconque des revendications 6 à 8, **caractérisé en ce que** l'élément de traction (60) a une largeur restant identique sur toute sa longueur.

10. Enrouleur de ceinture de sécurité selon l'une quelconque des revendications 6 à 8, **caractérisé en ce que** l'élément de traction (60) a, sur toute sa longueur, une largeur différente en fonction de la variation souhaitée du niveau de limitation d'effort.

11. Enrouleur de ceinture de sécurité selon l'une quelconque des revendications 1 à 10, **caractérisé en ce que** l'engrenage de comptage (22) est formé par une roue dentée (23) à denture extérieure, reliée à l'arbre d'enroulement (13), une autre roue dentée (24) à denture extérieure, montée fixe contre le boîtier, et une troisième roue dentée (25) à denture extérieure, disposée sur un commutateur à bascule (21) monté sur le boîtier de manière à pouvoir pivoter dans deux positions de commutation, sachant que les trois roues dentées (23, 24, 25) engrènent les unes avec les autres, et que sur les roues dentées (23, 24, 25) sont disposés des ergots de commutation (30, 31, 32a, b), qui définissent respectivement les points de commutation pour le commutateur à bascule (21) et qui parviennent en butée réciproque dans la position de déroulement prédéfinie et, de ce fait, font pivoter le commutateur à bascule (21) entre les positions de commutation.

12. Enrouleur de ceinture de sécurité selon la revendication 11, **caractérisé en ce que** la roue dentée (23), reliée à l'arbre d'enroulement (13), ainsi que la roue dentée (24), montée sur le boîtier, comportent chacune un ergot de commutation (30, 31) et la roue dentée (25) montée sur le commutateur à bascule (21) comporte deux ergots de commutation (32a, b) pour limiter l'hystérésis de commutation.

13. Enrouleur de ceinture de sécurité selon la revendication 11 ou 12, **caractérisé en ce que** le commutateur à bascule (21) actionne le cliquet (20) directement par l'intermédiaire d'une liaison mécanique.

14. Enrouleur de ceinture de sécurité selon la revendication 11 ou 12, **caractérisé en ce que** le commutateur à bascule (21) actionne le cliquet (20) indirectement par l'intermédiaire d'un interrupteur électrique interposé.

15. Enrouleur de ceinture de sécurité selon la revendication 11 ou 12, **caractérisé en ce que** le commutateur à bascule (21) actionne le cliquet (20) indirectement par l'intermédiaire d'un interrupteur pneumatique interposé.

16. Enrouleur de ceinture de sécurité selon l'une quelconque des revendications 1 à 13, **caractérisé en ce que** sur le cliquet (20) est disposé un cliquet de commande (29), qui est mobile par rapport à celui-ci et coopère avec le commutateur à bascule (21) et qui comporte une dent de commande (42) qui coopère avec la denture extérieure (34) de la bague dentée (19).

17. Enrouleur de ceinture de sécurité selon la revendication 16, **caractérisé en ce que** le cliquet (20) comporte un évidement formant palier (38) en forme de fente pour le cliquet de commande (29) réalisé en forme de U et inséré avec du jeu avec sa traverse de jonction (37) dans l'évidement formant palier (38).

18. Enrouleur de ceinture de sécurité selon la revendication 16 ou 17, **caractérisé en ce que** le cliquet (20) dans sa position de déblocage pour la bague dentée (19) est précontraint au moyen d'un ressort (35).

19. Enrouleur de ceinture de sécurité selon l'une quelconque des revendications 16 à 18, **caractérisé en ce que** le cliquet de commande (29) est sollicité par un ressort (50) précontraint dans la direction de l'engrènement avec la denture extérieure (34) de la bague dentée (19), et, dans la position de déblocage du cliquet de commande (29) pour la bague dentée (19), le ressort (50) précontraint est immobilisé au moyen d'un dispositif de retenue (52, 53) commutable séparément, qui débloque le ressort (50) précontraint lorsque le cliquet de commande (29) est amené en prise avec la denture extérieure (34) de la bague dentée (19).

20. Enrouleur de ceinture de sécurité selon la revendication 19, **caractérisé en ce que** le dispositif de retenue est formé par une coulisse (52) mobile par rapport au ressort (50) précontraint, entre une position de retenue et une position de déblocage.

21. Enrouleur de ceinture de sécurité selon la revendication 20, **caractérisé en ce que** la coulisse (52) est maintenue dans la position de retenue par un levier de retenue (53), qui prend appui par conjugaison de forme dans un évidement (55), ménagé sur la bague dentée (19), et qui se libère de la bague dentée (19) sous l'effet de la rotation de la bague dentée (19).

22. Enrouleur de ceinture de sécurité selon l'une quelconque des revendications 19 à 21, **caractérisé en ce que** le ressort (50) précontraint est disposé et aligné de telle sorte que la courbe de la force du ressort dans la position de déblocage du cliquet de commande (29) pour la bague dentée (19) passe par le palier rotatif (56) du cliquet de commande (29) sur le cliquet (20) et lorsque le cliquet de commande (29) est en position pivotée, génère, en raison de son fléchissement, un couple de rotation dans la direction d'engrènement du cliquet de commande (29) dans la bague dentée (19).
